# EUROPÄISCHE PATENTSCHRIFT

(11) **EP 3 812 313 B1**
(45) Veröffentlichungstag und Bekanntmachung des Hinweises auf die Patenterteilung: **07.06.2023**
(21) Anmeldenummer: 19204392.5
(22) Anmeldetag: 21.10.2019
(51) Int. Cl.: B65G 15/14, B23Q 3/00, B27B 25/06, B65G 21/20

(54) **PLATTENTRANSPORTVORRICHTUNG**
PLATE TRANSPORT DEVICE
DISPOSITIF DE TRANSPORT DE PLAQUES

(43) Veröffentlichungstag der Anmeldung: 28.04.2021
(73) Patentinhaber: IMA Schelling Deutschland GmbH, 32312 Lübbecke (DE)
(72) Erfinder: Hampel, Thomas, 32312 Lübbecke (DE); Hielscher, Ulrich, 32312 Lübbecke (DE)
(74) Vertreter: Schober, Mirko

(56) Entgegenhaltungen:
- EP-A1- 1 842 637
- DE-A1- 19 602 410
- JP-A- H11 227 927
- US-A- 4 457 422

## Beschreibung

Die Erfindung betrifft eine Plattentransportvorrichtung zum Transportieren von plattenförmigen Werkstücken, insbesondere solchen aus Holz oder Holzersatzstoffen.

Transportvorrichtungen, die ein Transportband verwenden, sind allgemein bekannt. So offenbaren JP H11 227 927 A und US 4 457 422 A Transportvorrichtungen, bei denen das Transportgut zwischen einem unteren und einem oberen Transportband geklemmt wird und aus einer waagerechten in eine senkrechte, in beiden Fällen nach oben gerichtete, und anschließend wieder in eine waagerechte Transportrichtung bewegt wird. Gehalten wird das Transportgut durch das Zusammenliegen bzw. Zusammenpressen der Transportbänder. Geeignet sind derartige Transportbänder für Schüttgut und kompaktes Stückgut; nicht geeignet sind sie für plattenförmige Werkstücke, weil bei einer Umlenkung senkrecht zur Ebene der maximalen Plattenausdehnung die Haftung der Transportbänder am Transportgut stark verringert wird und es zu Bandverschiebungen zwischen dem Oberband und dem Unterband durch unterschiedliche Kurvenradien kommt. Weiterhin kommt es zu Spannungen, da das außenliegende Band an den Enden der Platte zieht, während das innenliegende Band mittig auf die Platte den Gegendruck erzeugt.

Die DE 196 02 410 A1 offenbart eine Paketauslaufvorrichtung, bei der das Transportgut zwischen zwei Bändern transportiert wird. Zwischen den Umlenkrollen sind im Transportbereich Gewichtsrollen so angeordnet, dass sie das Transportband durch ihr Gewicht auf das Transportgut drücken und so zu einem Kontakt zwischen Oberband und Transportgut führen. Da bei der Transportvorrichtung keine Richtungsänderung senkrecht zur Auflagefläche des Transportguts vorgesehen ist, eignet sich eine derartige Vorrichtung auch für den Transport von plattenförmigen Werkstücken.

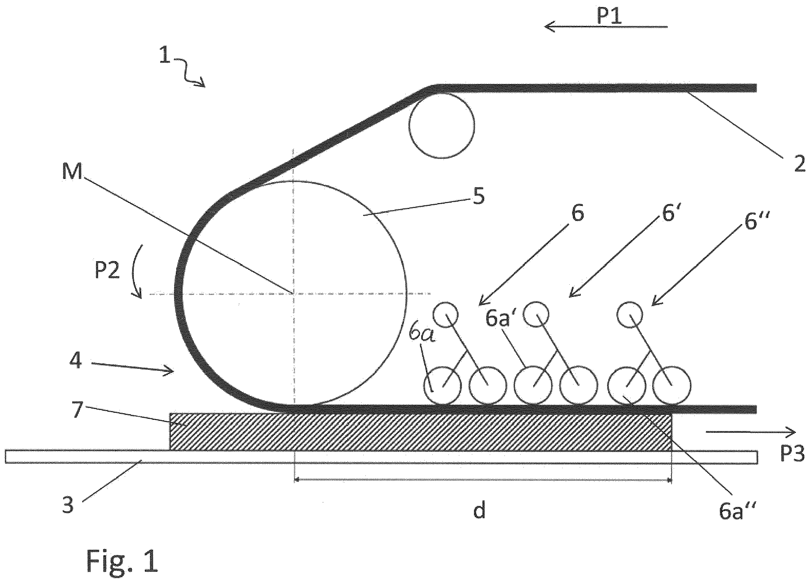

In Holzverarbeitungsmaschinen, mit welchen plattenförmige Werkstücke bearbeitet werden sollen, müssen die entsprechenden Werkstücke möglichst in einer definierten Position transportiert werden. Dazu gilt es vor allem, dass das Werkstück in die Plattentransportvorrichtung eingeschoben wird. Das Einschieben geschieht in der Regel manuell, indem eine Platte auf einer Zuführseite aufgegeben und von einem Transportelement erfasst wird. Eine gattungsgemäße Plattentransportvorrichtung 1 ist in der schematischen Ansicht der Figur 1 gezeigt.

Man erkennt dort die Zuführseite, bei der im Bereich 4 ein Werkstück 7 in Richtung des Pfeils P3 eingeführt und bewegt wird. 3 bezeichnet eine Werkstückunterlage. Zur Förderung des Werkstücks 7 ist ein Transportelement 2 vorgesehen, im gezeigten Beispiel beispielsweise ein Keilriemen, welcher um eine rollen- oder scheibenförmige Umlenkeinrichtung 5 umgelenkt wird. Die Bewegungsrichtung des Transportelements 2 ist dabei durch die Pfeile P1, P2 und P3 dargestellt, wobei die Umlenkeinrichtung 5 das Transportelement 2 aus einer Richtung P1 in eine Richtung P3 umlenkt. Im gezeigten Beispiel liegen P1 und P3 parallel zueinander. Um den Kontakt des Transportelements 2 mit dem Werkstück 7 zu intensivieren und zu halten, sind im gezeigten Beispiel eine Mehrzahl Andruckelemente 6, 6', 6" vorgesehen, die an der Innenseite des Transportelements angreifen und das Transportelement in Richtung des Werkstücks 7 drücken. Bevorzugt weisen sie dazu entsprechende Andruckrollen 6a, 6a', 6a" auf. Die Andruckrollen bzw. die Andruckelemente definieren dann den Andruckbereich, in welchem das Transportelement 2 einen Druck auf das Werkstück 7 ausübt. Im gezeigten Beispiel ist die Umlenkeinrichtung durch eine Rolle oder Scheibe 5 dargestellt, welche sich um eine Drehachse um ihren Mittelpunkt dreht. Man erkennt die Strecke d zwischen dem Mittelpunkt M und dem in Pfeilrichtung P3, also in Werkstücktransportrichtung, am weitesten hinten liegenden Andruckelement 6. Die Strecke d ist diejenige Strecke, die das Werkstück 7 mindestens in die Plattentransportvorrichtung 1 eingeschoben werden muss, um vom Transportelement 2 sauber erfasst und transportiert zu werden. Je nach Werkstück 7, insbesondere nach Länge des zuzuführenden Werkstücks 7, kann die Strecke d bereits einen erheblichen Längenanteil an der Gesamtlänge des Werkstücks 7 ausmachen. Mitunter ist es bei kürzeren Werkstücken 7 daher gar nicht mehr möglich, dass solche Werkstücke bei der in Figur 1 gezeigten Konstruktion sauber von der Plattentransportvorrichtung 1 erfasst werden. Eine ähnliche Vorrichtung ist beispielsweise auch aus EP 1 842 637 A1 bekannt, welche eine Plattentransportvorrichtung zum Transportieren von plattenförmigen Werkstücken aus Holz oder Holzersatzstoffen in einer Werkstücktransportrichtung offenbart, mit einem umlaufend angetriebenen Transportelement und einem Auflagebereich, auf welchem ein zu transportierendes Werkstück während des Transports aufliegt, einer Zuführseite, an welcher das Werkstück der Plattentransportvorrichtung zugeführt werden kann, wobei das Transportelement im Bereich der Zuführseite über wenigstens eine Umlenkeinrichtung aus einer von der Werkstücktransportrichtung verschiedenen Bewegungsrichtung in die Werkstücktransportrichtung durch eine gekrümmte Bahnkurve geführt und dadurch umgelenkt ist, wobei die Werkstücktransportrichtung und die Bewegungsrichtung parallel zueinander liegen, wobei die Plattentransportvorrichtung weiter wenigstens ein erstes Andruckelement aufweist, welches so angeordnet ist, dass es einen in Werkstücktransportrichtung verlaufenden Abschnitt des Transportelements gegen das Werkstück andrückt, und wobei die Plattentransportvorrichtung wenigstens ein weiteres Andruckelement aufweist, welches in Werkstücktransportrichtung hinter dem und benachbart zum ersten Andruckelement angeordnet ist.

Aufgabe der vorliegenden Erfindung ist es daher, eine Plattentransportvorrichtung der eingangs genannten Art so weiterzubilden, dass sich nach Möglichkeit auch kürzere Werkstücke problemlos erfassen lassen.

Gelöst wird diese Aufgabe durch eine Plattentransportvorrichtung mit den Merkmalen des Patentanspruchs 1. Vorteilhafte Ausführungsformen finden sich in den Unteransprüchen.

Durch die erfindungsgemäßen Ausführungsformen der Plattentransportvorrichtung kann die Strecke, in welche das Werkstück in der erfindungsgemäßen Plattentransportvorrichtung zunächst eingeschoben werden muss, um ordnungsgemäß transportiert werden zu können, deutlich reduziert werden. Es ist somit auch möglich, kürzere Werkstücke auch noch einzuführen und transportieren zu können. Zudem kann natürlich der erforderliche Bauraum im Übergabebereich verkleinert werden.

Die erfindungsgemäße Plattentransportvorrichtung dient zum Transportieren von plattenförmigen Werkstücken, insbesondere solchen aus Holz oder Holzersatzstoffen, in einer Werkstücktransportrichtung. Dazu weist sie ein umlaufend angetriebenes Transportelement und einen Auflagebereich auf, auf welchem ein zu transportierendes Werkstück während des Transports aufliegt. Der Auflagebereich kann eine unbewegliche Auflage sein, kann aber auch eine bewegliche Transporteinrichtung, z.B. eine Kette oder ein Förderband aufweisen. Ferner verfügt die Plattentransportvorrichtung über eine Zuführseite, an welcher das Werkstück der Plattentransportvorrichtung zugeführt werden kann. Das Transportelement ist dabei im Bereich der Zuführseite über wenigstens eine Umlenkeinrichtung aus einer von der Werkstücktransportrichtung verschiedenen Bewegungsrichtung in die Werkstücktransportrichtung durch eine gekrümmte Bahnkurve geführt und dadurch umgelenkt. Die Plattentransportvorrichtung weist weiter wenigstens ein erstes Andruckelement auf. Dieses ist so angeordnet, dass es einen in Werkstücktransportrichtung verlaufenden Abschnitt des Transportelements gegen das Werkstück andrückt.

Erfindungsgemäß bestehen zwei grundsätzliche Alternativen, die Umlenkeinrichtung auszubilden. Entsprechend der ersten Alternative weist die Umlenkeinrichtung eine Mehrzahl Rollen auf, deren Drehachsen auf einer zu der gekrümmten Bahnkurve parallelen Kurve liegen. Das erste Andruckelement ist dabei benachbart zur dem Auflagebereich nächstgelegenen Rolle der Umlenkeinrichtung angeordnet. Die Plattentransportvorrichtung weist hierbei wenigstens ein weiteres Andruckelement auf, welches in Werkstücktransportrichtung hinter dem und benachbart zum ersten Andruckelement angeordnet ist, wobei die parallele Kurve, auf der die Drehachsen der Rollen liegen, ein um einen Mittelpunkt geschlagener Kreisbogen ist, und wobei die Andruckrolle des ersten Andruckelements auf dem Kreisbogen liegt.

Bei dieser Ausführung kann eine scheibenartige Umlenkeinrichtung durch eine Mehrzahl kleinere Rollen ersetzt werden. Dadurch kann das erste Andruckelement näher zur Zuführseite der Plattentransportvorrichtung hin angeordnet werden, wodurch die oben genannte Strecke verkürzt wird.

Alternativ kann die Umlenkeinrichtung zwei über einen Zwischenraum voneinander getrennte Scheibenelemente umfassen, wobei wenigstens das erste Andruckelement zwischen den Scheibenelementen angeordnet ist. Hierdurch wird die genannte Strecke ebenfalls verkürzt, so dass sich auch hier das erste Andruckelement näher zur Zuführseite der Plattentransportvorrichtung hin platzieren lässt.

Nach einer bevorzugten Ausführungsform der zweiten Alternative der erfindungsgemäßen Plattentransportvorrichtung weist die Plattentransportvorrichtung wenigstens ein weiteres Andruckelement auf, welches in Werkstücktransportrichtung hinter dem und benachbart zur ersten Andruckeinrichtung angeordnet ist. Die Anzahl der weiteren Andruckelemente ist abhängig von der gewünschten Länge des Einführbereiches und der Größe der zu verarbeitenden Werkstücke.

Bei der ersten Alternative der erfindungsgemäßen Plattentransportvorrichtung kann ferner vorgesehen sein, dass die erste Andruckeinrichtung eine Andruckrolle aufweist, deren Drehachse unterhalb oder oberhalb der Drehachse der zur Andruckrolle benachbarten Rolle der Umlenkeinrichtung liegt. Die Variante "oberhalb" kann zum Beispiel zum Tragen kommen, wenn die Andruckrolle der Andruckeirichtung einen größeren Durchmesser aufweist, also die benachbarte Rolle der Umlenkeinrichtung. In jedem Fall sollte vorgesehen sein, dass die Lauffläche der Andruckrolle der ersten Andruckeinrichtung unterhalb der Lauffläche der benachbarten Rolle der Umlenkeinrichtung liegt, so dass der im Hinblick auf die Werkstückauflage unterste Abschnitt der Lauffläche der Andruckrolle unterhalb des im Hinblick auf die Werkstückauflage untersten Abschnitts der Lauffläche benachbarten Rolle der Umlenkeinrichtung liegt. So wird sichergestellt, dass die Lage der Andruckpunkte auf das Werkstück ausschließlich durch die Andruckelemente und nicht durch die Umlenkeinrichtung erfolgt. Dies hat auch den Vorteil, dass man die Andruckelemente in ihrer Höhe, d.h. im Abstand zur Werkstückauflage veränderbar ausbilden kann, um Werkstücke unterschiedlicher Plattenstärke verarbeiten zu können. Die Andruckelemente können in allen Alternativen daher grundsätzlich mit einer Richtungskomponente senkrecht zur Werkstückauflage verschieblich und/oder verschwenkbar ausgebildet sein.

Bei der ersten Alternative ist erfindungsgemäß vorgesehen, dass die parallele Kurve, auf der die Drehachsen der Rollen liegen, ein um einen Mittelpunkt geschlagener Kreisbogen ist. Dabei liegt auch die Andruckrolle der ersten Andruckeinrichtung auf dem Kreisbogen. Durch die Kreisbogenführung können die von der Maschinensteuerung durchgeführten Berechnungen etwa zur Lage des Transportelements im Gegensatz zu beliebigen Kurvenbahnen vereinfacht werden.

Bei allen Alternativen der erfindungsgemäßen Plattentransportvorrichtung kann vorgesehen sein, dass das Transportelement ein Keilriemen oder Zahnriemen ist. Auch andere Transportelemente sind denkbar.

Nach einer bevorzugten Ausführungsform ist das Transportelement in einer Führungsrolle oder Führungsscheibe geführt und so gegen seitliches Verschieben gesichert. Gerade bei der Ausführung als Zahn- oder Keilriemen kann so vermieden werden, dass es zu Fehlfunktionen kommt oder das Transportelement durch seitliche Kräfte ausbricht.

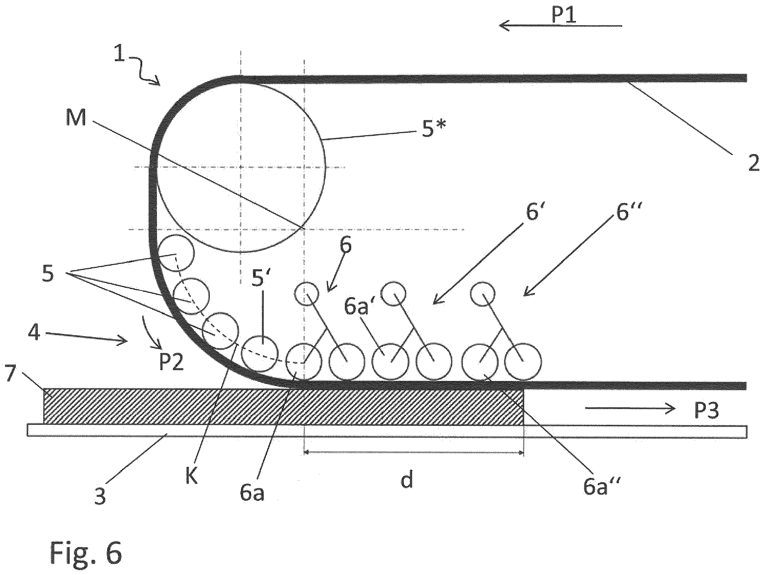

Die Erfindung wird nachfolgend anhand von in den Figuren 2 bis 6 dargestellten Ausführungsbeispielen näher erläutert.

Figur 1 zeigt eine Plattentransportvorrichtung nach dem Stand der Technik.

Figur 2 zeigt eine erste Ausführungsform der erfindungsgemäßen Plattentransportvorrichtung in seitlicher Ansicht.

Figur 3 zeigt eine zweite Ausführungsform der erfindungsgemäßen Plattentransportvorrichtung in seitlicher Ansicht.

Figur 4 zeigt eine zur ersten und zweiten Ausführungsform gehörende Querschnittansicht im Bereich der Umlenkeinrichtung und eines Andruckelements.

Figur 5 zeigt eine dritte Ausführungsform der erfindungsgemäßen Plattentransportvorrichtung in seitlicher Ansicht.

Figur 6 zeigt eine vierte Ausführungsform der erfindungsgemäßen Plattentransportvorrichtung in seitlicher Ansicht.

In der obigen Beschreibung der Figur 1, die eine Plattentransportvorrichtung nach dem Stand der Technik beschreibt, wurden bereits einige Bauteile unter Bezugnahme auf dortige Bezugszeichen diskutiert. Insofern kann für die folgenden Ausführungen auch auf die Ausführungen zu Figur 1 verwiesen werden.

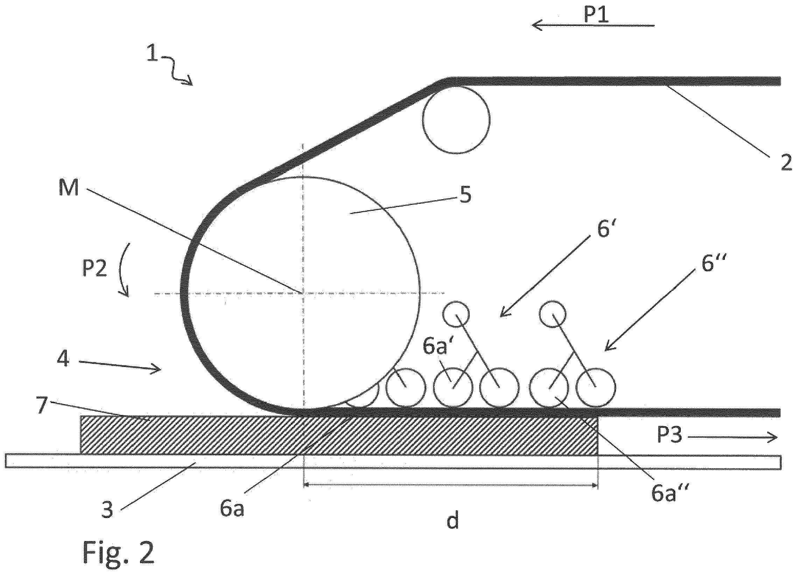

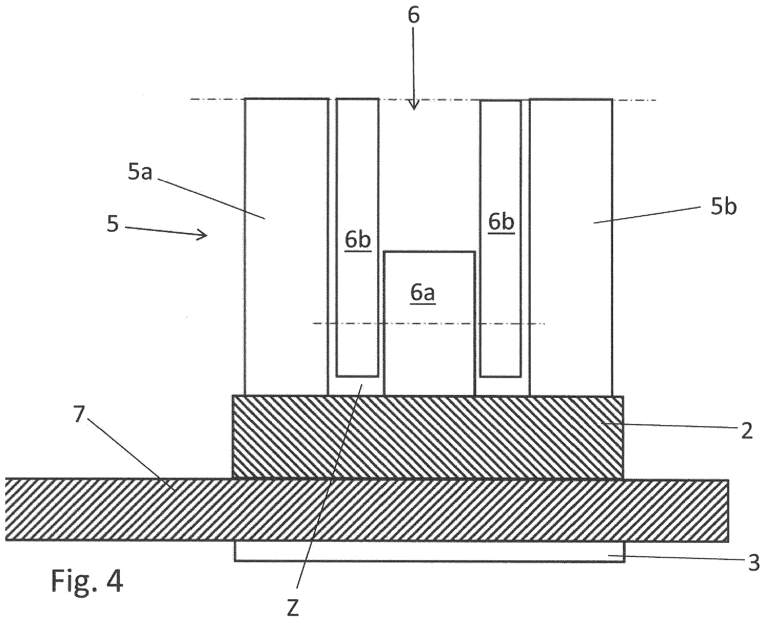

Eine erste erfindungsgemäße Ausführungsform ist in der Figur 2 dargestellt. Im Gegensatz zum Stand der Technik (Figur 1) ist das in Einschubrichtung vorderste Andruckelement (hier durch die Rolle 6a angedeutet) in Bezug auf die Drehachse der Umlenkeinrichtung 5 nach vorne, d. h. entgegen der Transportrichtung P3 verlagert. In Figur 2 erkennt man, dass die Strecke d zwischen dem Mittelpunkt M der als Scheibe 5 ausgebildeten Umlenkeinrichtung und dem letzten Andruckelement 6" (genauer dem hinteren Berührungspunkt der rechten Andruckrolle an das Transportelement 2) kürzer ist als dies in Figur 1 der Fall ist. Dies liegt daran, dass die Umlenkeinrichtung in Gestalt einer geteilten Scheibe 5 ausgebildet ist, sodass das Andruckelement in einen Zwischenraum Z zwischen die beiden Teilscheiben 5a und 5b hineinreicht. Diese Situation ist in Figur 4 dargestellt. Das Andruckelement 6 weist wenigstens eine Andruckrolle 6a auf, die an Lagern 6b gelagert ist. Diese Rolle 6a liegt zwischen den beiden Scheiben 5a und 5b und drückt gegen das Transportelement 2. Auf diese Weise lassen sich die Andruckelemente der 6, 6' und 6" bezogen auf den Einschubbereich 4 des Werkstücks weiter vorne anordnen, sodass die Einschubstrecke d verkürzt wird.

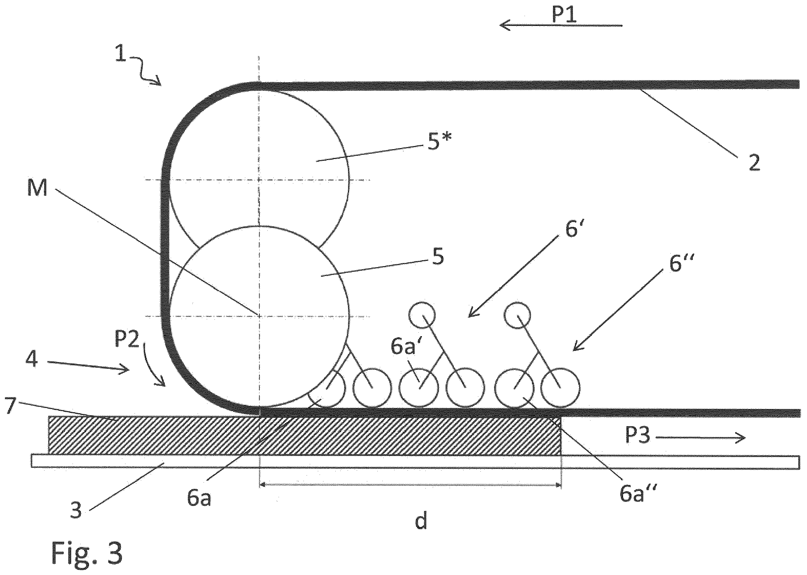

Eine ähnliche Anordnung ist auch der Figur 3 zu entnehmen, der einzige Unterschied besteht lediglich darin, dass zusätzlich oberhalb der geteilten Scheibe 5 noch eine Führungsschreibe 5* angeordnet ist. Ist das Transportelement 2 beispielsweise als Keilriemen oder Zahnriemen ausgebildet, so dient die Führungsschreibe dazu, dass das Transportelement 2 nicht seitlich (hier also aus der Zeichenebene heraus) ausweichen kann. Die Funktion ist ansonsten identisch zur Ausführungsform gemäß Figur 2.

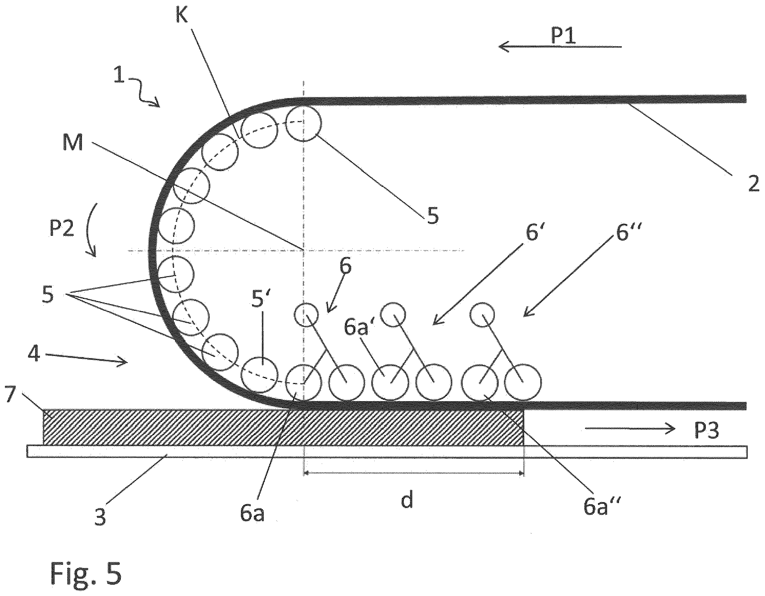

Mit der in Figur 5 dargestellten Anordnung lässt sich die Strecke d auch gegenüber der Ausführungsform gemäß der Figuren 2 bis 4 noch weiter verkürzen. In einer ersten Ausführungsform dieser Variante sind keine großformatigen Scheiben mehr vorhanden, sondern das Transportelement wird durch eine Umlenkeinrichtung 5 in seiner Bewegungsrichtung P1, P2, P3 umgelenkt, die eine Mehrzahl Rollen oder Walzen aufweist, deren Durchmesser verhältnismäßig gering ist. Auf diese Weise lässt sich weiterer Bauraum sparen. Bevorzugt liegen die Drehachsen der einzelnen Rollen oder Walzen 5, 5' auf einer vorgegebenen Bahnkurve, insbesondere einer Kreisbahn K. Die in der Zeichnung unterste Rolle 5' liegt dann benachbart zum ersten Andruckelement 6, wobei die Andruckrolle 6a des Andruckelement 6 bevorzugt noch hinsichtlich ihrer Drehachse leicht unterhalb der Drehachse der Rolle 5' liegt. Ein Vergleich mit der Ausführungsform gemäß Figur 2 zeigt, dass die Strecke d zwischen dem Punkt M und der letzten Rolle des hinteren Andruckelements 6" bei der Ausführungsform in Figur 5 noch weiter verkürzt wird. Dies liegt daran, dass sich das vordere Andruckelement 6 bereits unterhalb des Punktes M anordnen lässt, was bei den bisher diskutierten Ausführungsformen nicht möglich war.

Ähnlich wie in Figur 3 kann auch bei dieser Variante der erfindungsgemäßen Plattentransportvorrichtung 1 eine Führungsrolle 5* vorgesehen sein, die ein zeitliches Ausbrechen des Transportelements 2 verhindert. Für die Funktion des Führungselements oder der Führungsrolle 5* wird auf die Ausführungen zu Figur 3 verwiesen.

Mit der erfindungsgemäßen Plattentransportvorrichtung 1 kann so der Einschubweg, d. h. der Weg, der erforderlich ist, damit ein plattenförmiges Werkstück 7 von dem Transportelement 2 sicher erfasst und durch die weitere Anlage transportiert werden kann, gegenüber der Konstruktion nach dem Stand der Technik deutlich verringert werden. Dies spart Bauraum, der dann an anderer Stelle für andere Funktionen innerhalb einer Anlage zur Verfügung steht.

## Patentansprüche

1. Plattentransportvorrichtung (1) zum Transportieren von plattenförmigen Werkstücken, insbesondere solchen aus Holz oder Holzersatzstoffen, in einer Werkstücktransportrichtung (P3) mit einem umlaufend angetriebenen Transportelement (2) und einem Auflagebereich (3), auf welchem ein zu transportierendes Werkstück während des Transports aufliegt, einer Zuführseite (4), an welcher das Werkstück der Plattentransportvorrichtung (1) zugeführt werden kann, wobei das Transportelement (1) im Bereich der Zuführseite (4) über wenigstens eine Umlenkeinrichtung (5) aus einer von der Werkstücktransportrichtung (P3) verschiedenen Bewegungsrichtung (P1, P2) in die Werkstücktransportrichtung (P3) durch eine gekrümmte Bahnkurve geführt und dadurch umgelenkt ist, wobei die Plattentransportvorrichtung (1) weiter wenigstens ein erstes Andruckelement (6) aufweist, welches so angeordnet ist, dass es einen in Werkstücktransportrichtung (P3) verlaufenden Abschnitt des Transportelements (2) gegen das Werkstück andrückt, wobei
i) die Umlenkeinrichtung (5) eine Mehrzahl Rollen (5) aufweist, deren Drehachsen auf einer zu der gekrümmten Bahnkurve parallelen Kurve (K) liegen, wobei das erste Andruckelement (6) benachbart zur dem Auflagebereich (3) nächstgelegenen Rolle (5') der Umlenkeinrichtung (5) angeordnet ist, wobei die Plattentransportvorrichtung (1) wenigstens ein weiteres Andruckelement (6', 6") aufweist, welches in Werkstücktransportrichtung (P3) hinter dem und benachbart zum ersten Andruckelement (6) angeordnet ist, wobei die parallele Kurve, auf der die Drehachsen der Rollen (5) liegen, ein um einen Mittelpunkt (M) geschlagener Kreisbogen ist, und wobei die Andruckrolle (6a) des ersten Andruckelements (6) auf dem Kreisbogen liegt oder
ii) die Umlenkeinrichtung (5) zwei über einen Zwischenraum (2) voneinander getrennte Scheibenelemente (5a, 5b) umfasst, wobei wenigstens das erste Andruckelement (6) zwischen den Scheibenelementen (5a, 5b) angeordnet ist.

2. Plattentransportvorrichtung (1) nach Anspruch 1 sowie der Alternative ii) von Anspruch 1,
**dadurch gekennzeichnet,**
**dass** sie wenigstens ein weiteres Andruckelement (6', 6") aufweist, welches in Werkstücktransportrichtung (P3) hinter dem und benachbart zum ersten Andruckelement (6) angeordnet ist.

3. Plattentransportvorrichtung (1) nach Anspruch 1 sowie der Alternative i) von Anspruch 1,
**dadurch gekennzeichnet,**
**dass** das erste Andruckelement (6) eine Andruckrolle (6a) aufweist, deren Drehachse unterhalb oder oberhalb der Drehachse der zur Andruckrolle (6a) (6) benachbarten Rolle (5') der Umlenkeinrichtung (5) liegt.

4. Plattentransportvorrichtung (1) nach einem der vorigen Ansprüche,
**dadurch gekennzeichnet,**
**dass** das Transportelement (2) ein Keilriemen oder Zahnriemen ist.

5. Plattentransportvorrichtung (1) nach einem der vorigen Ansprüche,
**dadurch gekennzeichnet,**
**dass** das Transportelement (2) in einer Führungsrolle oder Führungsscheibe (5*) geführt und gegen seitliches Verschieben gesichert ist.

## Claims

1. Plate transport device (1) for transporting plate-type workpieces, in particular those made of wood or wood substitutes, in a workpiece transport direction (P3) with a driven revolving transport element (2) and a bearing support region (3) on which a workpiece which is to be transported is positioned during transport, an infeed side (4) at which the workpiece can be supplied to the plate transport device (1), wherein the transport element (1) is guided in the region of the infeed side (4) via at least one deflection device (5) from a direction of movement (P1, P2), which is different from the workpiece transport direction (P3), into the workpiece transport direction (P3) through a curved path and is thereby deflected, wherein the plate transport device (1) further has at least one first contact pressure element (6) which is disposed so that it presses a portion of the transport element (2), running in the workpiece transport direction (P3), against the workpiece, wherein
i) the deflection device (5) has a number of rollers (5) whose rotational axes lie on a curve (K) parallel to the curved path, wherein the first contact pressure element (6) is disposed adjacent the roller (5') of the deflection device (5) that is next to the support bearing region (3), wherein the plate transport device (1) has at least one further contact pressure element (6', 6") which is disposed in the workpiece transport direction (P3) behind the, and adjacent to, the first contact pressure element (6), wherein the parallel curve on which the rotational axes of the rollers (5) are situated, is a circular arc turned about a centre point (M), and wherein the contact pressure roller (6a) of the first contact pressure element (6) lies on the circular arc or
ii) the deflection device (5) comprises two disc elements (5a, 5b) separated from one another via an interspace (Z), wherein at least the first contact pressure element (6) is arranged between the disc elements (5a, 5b).

2. Plate transport device (1) according to Claim 1 as well as the alternative ii) of Claim 1, **characterised in that** it has at least one further contact pressure element (6', 6") which is arranged in the workpiece transport direction (P3) behind the, and adjacent to, the first contact pressure element (6).

3. Plate transport device (1) according to Claim 1, as well as to the alternative i) of Claim 1, **characterised in that** the first contact pressure element (6) has a contact pressure roller (6a) whose rotational axis lies below or above the rotational axis of the roller (5') of the deflection device (5) adjacent the contact pressure roller (6a).

4. Plate transport device (1) according to one of the preceding claims **characterised in that** the transport element (2) is a V-belt or toothed belt.

5. Plate transport device (1) according to one of the preceding claims **characterised in that** the transport element (2) is guided in a guide roller or guide disc (5*) and is secured against lateral displacement.

## Revendications

1. Dispositif de transport des plaques (1) pour transporter des pièces en forme de plaque, surtout ceux en bois ou en matériaux de substitution du bois, dans une direction de transport des pièces (P3), avec un élément de transport (2), entraîné en rotation, et une zone d'appui (3), sur laquelle repose une pièce à transporter pendant le transport, un côté d'alimentation (4), sur lequel la pièce peut être alimentée au dispositif de transport des plaques (1), dans lequel l'élément de transport (1), dans la zone du côté d'alimentation (4), est guidé et ainsi dévié, par l'intermédiaire d'au moins un dispositif de déviation (5) depuis une direction de déplacement (P1, P2), différente de la direction de transport de la pièce (P3), dans la direction de transport de la pièce, par une courbe de trajectoire (P3), dans lequel, le dispositif de transport des plaques (1) comporte en outre au moins un premier élément de pression (6), qui est agencé de manière à presser contre la pièce une partie de l'élément de transport (2) s'étendant dans la direction de transport de la pièce,
dans lequel
i) le dispositif de déviation (5) comprend une pluralité de rouleaux (5), dont les axes de rotation sont situés sur une courbe (K) parallèle à la courbe de trajectoire, dans lequel le premier élément de pression (6) est agencé adjacent au rouleau (5') du dispositif de déviation (5) le plus proche de la zone d'appui (3), dans lequel le dispositif de transport des plaques (1) comporte au moins un autre élément de pression (6', 6"), qui est agencé dans la direction de transport de la pièce (P3) derrière et adjacent au premier élément de pression (6), dans lequel la courbe parallèle, sur laquelle se trouvent les axes de rotation des rouleaux (5), est un arc de cercle autour d'un point central (M), et dans lequel le rouleau de pression (6a) du premier élément de pression (6) est situé sur l'arc de cercle, ou
ii) le dispositif de déviation (5) comporte deux éléments de disque (5a, 5b), séparés les uns des autres par un espace (Z), dans lequel au moins le premier élément de pression (6) est agencé entre les éléments de disque (5a, 5b).

2. Dispositif de transport des plaques (1) selon la revendication 1 ainsi l'alternative ii) de la revendication 1,
**caractérisé en ce**
**qu'**il comporte au moins un autre élément de pression (6', 6"), qui est agencé dans la direction de transport des pièces (P3) derrière et adjacent au premier élément de pression (6).

3. Dispositif de transport des plaques (1) selon la revendication 1 ainsi l'alternative i) de la revendication 1,
**caractérisé en ce**
**que** le premier élément de pression (6) comporte un rouleau de pression (6a), dont l'axe de rotation est situé en dessous ou au-dessus de l'axe de rotation du rouleau (5') du dispositif de déviation (5) adjacent au rouleau de pression (6a).

4. Dispositif de transport des plaques (1) selon l'une quelconque des revendications précédentes,
**caractérisé en ce**
**que** l'élément de transport (1) est un courroie trapézoïdale ou un courroie dentée.

5. Dispositif de transport des plaques (1) selon l'une quelconque des revendications précédentes,
**caractérisé en ce**
**que** l'élément de transport (2) est guidé dans un rouleau de guidage ou un disque de guidage (5*), et est protégé contre un déplacement latéral.
